# EUROPÄISCHE PATENTSCHRIFT

(11) **EP 1 645 024 B1**
(45) Veröffentlichungstag und Bekanntmachung des Hinweises auf die Patenterteilung: **28.03.2018**
(21) Anmeldenummer: 04738799.8
(22) Anmeldetag: 26.06.2004
(51) Int. Cl.: H02M 7/06

(54) **GLEICHRICHTERANORDNUNG MIT UNTERSCHIEDLICHEN GLEICHRICHTERELEMENTEN**
RECTIFIER ARRANGEMENT HAVING DIFFERENT RECTIFIER ELEMENTS
SYSTEME DE REDRESSEUR COMPORTANT PLUSIEURS ELEMENTS DE REDRESSEUR

(30) Priorität: 04.07.2003 DE 10330258
(43) Veröffentlichungstag der Anmeldung: 12.04.2006
(73) Patentinhaber: ROBERT BOSCH GMBH, 70442 Stuttgart (DE)
(72) Erfinder: SPITZ, Richard, 72766 Reutlingen (DE); GOERLACH, Alfred, 72127 Kusterdingen (DE); WOLF, Gert, 71563 Affalterbach (DE); MUELLER, Markus, 74078 Heilbronn (DE)
(86) Internationale Anmeldenummer: PCT/DE2004/001352
(87) Internationale Veröffentlichungsnummer: WO 2005/006529

(56) Entgegenhaltungen:
- EP-A- 1 102 389
- FR-A- 2 648 966
- PATENT ABSTRACTS OF JAPAN Bd. 0091, Nr. 69 (E-328), 13. Juli 1985 (1985-07-13) -& JP 60 043071 A (NIPPON DENKI KK), 7. März 1985 (1985-03-07)

## Beschreibung

### Stand der Technik

Gleichrichter für Kfz-Drehstromgeneratoren werden üblicherweise mit 6 Siliziumdioden ausgestattet, die als Brücke verschaltet sind. Kennzeichnend ist für alle diese Geichrichterkonfiguration, dass sie in der Regel entweder nur mit hochsperrenden Dioden, also Dioden ohne Spannungsbegrenzungsfunktion oder Zenerdioden, also Dioden mit Spannungsbegrenzungsfunktion bestückt sind. Es werden dabei also jeweils nur gleichartige Halbleiterdioden verwendet. Eine Ausnahme sind Gleichrichter, bei denen ein zusätzliches Paar von Dioden mit dem Sternpunkt der Generatorständerwicklung verbunden sind. Die Sternpunktsdioden sind in diesem Fall aus Kostengründen manchmal als hochsperrende Dioden ausgeführt, die Phasendioden aber als Zenerdioden.

Es sind auch Gleichrichter mit 7, 8, 12, 14 oder mehr Dioden im Einsatz. Dabei wird beispielsweise die Anzahl der Dioden dann von 6 auf 12 verdoppelt, wenn besonders hohe Temperatur- oder Stromanforderungen erfüllt werden sollen. Die Verschaltung der Dioden ist dann so, dass zwei Dioden parallelgeschaltet werden.

Die Höhe des gleichgerichteten Signals, also des Generatorstroms oder der Generatorspannung zeigt eine charakteristische Variation, die von verschiedenen Einflussfaktoren abhängt. Diese Variation wird als Generatorwelligkeit bezeichnet. Ein wesentlicher Beitrag zur Generatorwelligkeit wird durch die sogenannte Reverse Recovery Zeit trr der Dioden verursacht. Die Reverse Recovery Zeit trr ist dabei eine Art Schaltzeit.

Werden herkömmliche Generatoren bei hohen Drehzahlen und großen Strömen betrieben, steigt die Spannungs- bzw. Stromwelligkeit stark an, da die zu schaltende Stromflanke dIF/dt zunimmt. Das Dokument FR 2648966 offenbart eine Gleichrichteranordnung gemäss dem Oberbegriff des Anspruchs 1.

### Vorteile der Erfindung

Die Erfindung betrifft eine Gleichrichteranordnung gemäss Anspruch 1. Die erfindungsgemäße Gleichrichteranordnung hat den Vorteil, dass auch bei hohen Drehzahlen und großen Strömen die Spannungs- bzw. Stromwelligkeit gering bleibt, so dass der Einsatz von erfindungsgemäßen Gleichrichtern unter Verwendung von Dioden auch bei Generatoren mit hoher Leistung möglich ist. Erzielt wird dieser Vorteil, durch die im Anspruch 1 angegebene Merkmalskombination, nach der eine Gleichrichteranordnung, insbesondere eine Gleichrichterbrücke, die mehrere Gleichrichterelemente umfasst, so ausgestaltet ist, dass vorgebbare Gleichrichterelemente sich in wenigstens einer Eigenschaft von den übrigen Gleichrichterelementen unterscheidet. Die Gleichrichterelemente sind vorteilhafter Weise Dioden.

Weitere vorteilhafte Ausgestaltungen werden durch die in den abhängigen Ansprüchen angegebenen Maßnahmen erhalten. Dabei ist besonders vorteilhaft, dass bei Gleichrichteranordnungen, die bei sehr hohen Strömen funktionsfähig bleiben sollen, durch Verdoppelung der Zahl der eingesetzten Dioden und Parallelschaltung von jeweils zwei Dioden die Spannungs- bzw. Stromwelligkeit ebenfalls deutlich verringert werden kann, indem als parallelgeschalteten Dioden jeweils Dioden mit wenigstens einer unterschiedlichen Eigenschaften eingesetzt werden.

Die Eigenschaften, in denen sich die eingesetzten Gleichrichterelemente bzw. Dioden unterscheiden sind erfindungsgemäss die Schaltzeit, bzw. die Reverse Recovery-Schaltzeit.

### Zeichnung

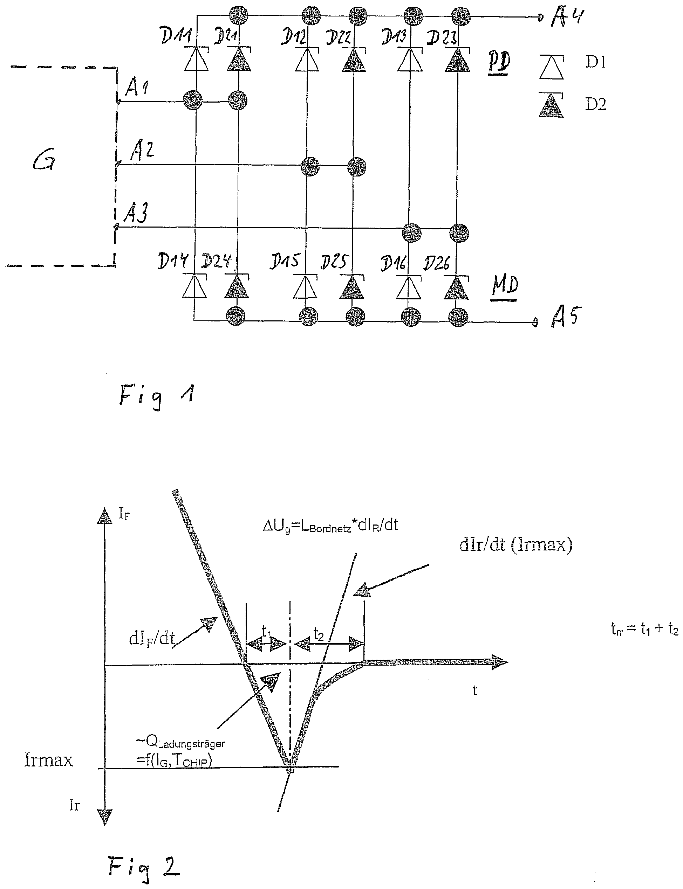

Ein Ausführungsbeispiel der Erfindung ist in der Zeichnung dargestellt und wird in der Beschreibung näher erläutert. Im einzelnen zeigt Figur 1 eine erfindungsgemäße Ausgestaltung einer Gleichrichterbrücke mit unterschiedlichen Gleichrichterelementen. Figur 2 verdeutlicht schematisch den prinzipiellen Diodenstromverlauf über der Zeit während eines Abschaltvorgangs.

### Beschreibung

In der Figur 1 ist ein Ausführungsbeispiel für eine Gleichrichteranordnung dargestellt. Diese Gleichrichteranordnung umfasst eine Gleichrichterbrücke mit sechs Plusdioden PD und sechs Minusdioden MD, also mit insgesamt 12 Dioden, wobei die Dioden D11 bis D16 (D1), sich in wenigstens einer Eigenschaft von den Dioden D21 bis D26 (D2) unterscheiden. Die Dioden sind gemäß Ausführungsbeispiel Zenerdioden, generell können geeignete Gleichrichterelemente eingesetzt werden. Jeweils zwei Dioden mit unterschiedlichen Eigenschaften sind parallel geschaltet, beispielsweise die Diode D11 und die Diode D21.

Die Gleichrichterbrücke ist über die Anschlüsse A1, A2, A3 mit einem Generator G verbindbar, wobei über diese Anschlüsse prinzipiell das gleichzurichtende Signal, also eine Spannung oder ein Strom zugeführt werden kann. An den Anschlüssen A4 und A5 entsteht das gleichgerichtete Signal. Der Anschluß A5 liegt üblicher Weise auf Masse.

Durch die Parallelschaltung von vorgebbaren Dioden ist die in Figur 1 dargestellte Gleichrichteranordnung geeignet, bei Generatoren mit sehr hohen Strömen eingesetzt zu werden und kann auch bei großen Drehzahlen die dann vom Generator abhegebene hohe Leistung noch verarbeiten bzw. die Generatorspannung oder den Generatorstrom gleichrichten.

Die Dioden D1 und D2 bzw. D11 bis D16 und D21 bis D26 unterscheiden sich voneinander in mindestens einer Eigenschaft, gegebenenfalls auch in einer Kombination von Eigenschaften, wobei diese Eigenschaft oder Eigenschaften die Schaltzeit, bzw. die Reverse Recovery-Schaltzeit (trr) Neben der in der Figur 1 dargestellten Ausgestaltung sind auch andere Kombinationen von Dioden oder Gleichrichterelementen möglich. Beispielsweise können sich die "unteren", also die Minusdioden nur aus einem Diodentyp zusammensetzen. Es wären dann die Dioden MD vom alle vom gleichen Typ, während die Plusdioden PD in D1 und D2 unterscheiden. Auch die umgekehrte Lösung ist möglich.

Eine weitere Ausgestaltung besteht darin, dass nur in einem oder zwei Strängen unterschiedliche Diodentypen bzw. Dioden mit unterschiedlichen Eigenschaften eingesetzt werden. Weitere Ausgestaltungen können neun Dioden, beispielsweise sechs in beschriebener Weise parallel geschaltete Plusdioden und drei Minusdioden MD umfassen.

In Figur 2 ist der prinzipielle Verlauf des Diodenstroms IF während eines Abschaltvorgangs über der Zeit t dargestellt. Dabei ist zu erkennen, dass beim Abschalten eines hohen Diodenstromes IF mit einer Steigung dIF/dt zum Zeitpunkt des Übergangs von Fluss zu Sperrpolung für eine gewisse Zeit, die Reverse Recovery Zeit trr ein Strom in Rückwärtsrichtung Ir fließt, da zuerst Minoritätsladungsträger in der Diode ausgeräumt oder abgebaut werden müssen, wobei gilt: QLadungsträger = f/IG, TCHIP). Die Reverse Recovery Zeit trr kann in einen Zeitabschnitt t1 und einen Zeitabschnitt t2 aufgeteilt werden.

Häufig ist der Stromabriss im zweiten Zeitabschnitt t2 sehr abrupt, d.h. die Stromänderung dIr/dt beim maximalen Rückwärtsstrom Irmax ist sehr groß. Irmax repräsentiert dabei den dem Rückwärtsstromwendepunkt. Die vorstehend genannten Bedingungen führen dazu, dass ein dass nur ein geringer Softfaktor erhalten wird. Mit Softfaktor wird der Zusammenhang s = t2/t1 bezeichnet.

Die entstehende Spannungswelligkeit kann mit ΔUg = LBN*dIr/dtmax abgeschätzt werden, wobei gilt:
tmax : Zeitpunkt des maximalen Stromänderung dIr/dt, ist i.a. mit dem Zeitpunkt des maximalen Rückwärtsstromes identisch.
LBN : Bordnetzinduktivität

Werden nun Dioden mit unterschiedlicher Reverse Recovery Zeit geeignet parallel geschaltet, kann der Stromabriss weicher, d.h. mit geringerem dIr/dtmax eingestellt werden. Dies äußert sich in einer geringeren Welligkeit der gleichgerichteten Spannung und damit auch des gleichgerichteten Stroms. Es kann somit erfindungsgemäß die Welligkeit durch Einsatz bestimmter Dioden bzw. Gleichrichterelemente verringert werden. Erfindungsgemäß wird eine Diode D1 mit hohem Softfaktor s1 und eine Diode D2 mit weichem Softfaktor s2 parallel geschaltet. Wenn die Diode D1 mit einer, beispielsweise um 20 % - 40 % geringeren Stromdichte als Diode D2 betrieben wird, erreichen die Dioden den Rückstromwendepunkt zu unterschiedlichen Zeiten. Dies führt zu einem insgesamt weichen Schalten, d.h. zu einem größeren Softfaktor der Gesamtanordnung.

Eingesetzt in eine Gleichrichteranordnung mit einer Vielzahl von Gleichrichterelementen, insbesondere Dioden, ist es möglich, die Gleichrichteranordnung so auszugestalten, dass an vorgebbaren Stellen Parallelschaltungen von Dioden mit unterschiedlichen Eigenschaften eingesetzt werden, wobei die Auswahl der Dioden unter Berücksichtigung der zu erzielenden Effekte zu erfolgen hat. Ein bevorzugtes Einsatzgebiet ist für die Gleichrichterbrücke bei einem Hochleistungsgenerator in einem KFZ.

Zusammengefasst kann mit der Erfindung eine Reduzierung der Generatorwelligkeit durch Parallelschaltung von Dioden mit unterschiedlichen Reverse Recovery Eigenschaften und/oder unterschiedlicher Stromdichte erhalten werden. Zum Erzielen des unterschiedlichen Reverse Recovery Verhaltens können Dioden mit unterschiedlichen Durchbruchspannungen eingesetzt werden und beispielsweise Halbleiterdioden im Zenerspannungsbereich von 18 Volt bis 50 Volt mit Dioden im Zenerspannungsbereich von 100 Volt bis 800 Volt kombiniert werden. Unterschiedliche Stromdichten können durch unterschiedliche Chipflächen und/oder unterschiedlichen Chipdicken und/oder unterschiedliche Bahnwiderstände der Halbleiter realisiert werden.

## Patentansprüche

1. Gleichrichteranordnung, insbesondere Gleichrichterbrücke für einen Drehstromgenerator, die mehrere Gleichrichterelemente umfasst, **dadurch gekennzeichnet, dass** die Gleichrichterelemente Parallelschaltungen von zwei Dioden mit unterschiedlichen Schaltzeiten bzw. unterschiedlichen Reverse Recovery-Schaltzeiten (trr) aufweisen, wobei die unterschiedliche Schaltzeiten bzw. unterschiedliche Reverse Recovery-Schaltzeiten (trr) so gewählt werden, dass die Welligkeit der am Ausgang der Gleichrichteranordnung abgreifbaren Spannung oder des abgreifbaren Stromes minimal ist oder zumindest reduziert wird.

2. Gleichrichteranordnung nach einem der vorhergehenden Ansprüche, **dadurch gekennzeichnet, dass** die Dioden Zenerdioden sind.

3. Gleichrichteranordnung nach einem der vorhergehenden Ansprüche, **dadurch gekennzeichnet, dass** das unterschiedliche Reverse-Recovery-Verhalten durch Verwendung von Dioden mit unterschiedlichen Durchbruchspannungen erreicht wird.

4. Gleichrichteranordnung nach Anspruch 3, **dadurch gekennzeichnet, dass** eine der beiden Dioden im Zenerspannungsbereich von 18 Volt bis 50 Volt und die andere im Zenerspannungsbereich von 100 Volt bis 800 Volt liegt.

5. Gleichrichteranordnung nach einem der vorhergehenden Ansprüche, **dadurch gekennzeichnet, dass** bei einer Gleichrichterbrücke als Gleichrichterelemente zwölf Dioden eingesetzt werden, wobei jeweils zwei Dioden mit unterschiedlichen Schaltzeiten bzw. unterschiedlichen Reverse Recovery-Schaltzeiten (trr) parallelgeschaltet sind.

6. Gleichrichteranordnung nach einem der vorhergehenden Ansprüche, **dadurch gekennzeichnet, dass** bei einer Gleichrichterbrücke mit zwölf Dioden entweder nur die Plus- oder nur die Minus-Dioden Parallelschaltungen von zwei Dioden mit unterschiedlichen Eigenschaften aufweisen.

7. Gleichrichteranordnung nach einem der vorhergehenden Ansprüche, **dadurch gekennzeichnet, dass** bei einer Gleichrichterbrücke mit zwölf Dioden vier Dioden mit der ersten Eigenschaft und acht mit der zweiten Eigenschaft eingesetzt werden.

## Claims

1. Rectifier arrangement, in particular rectifier bridge for a three-phase generator, which comprises a plurality of rectifier elements, **characterized in that** the rectifier elements have parallel circuits of two diodes with different switching times or different reverse recovery switching times (trr), wherein the different switching times or different reverse recovery switching times (trr) are selected in such a way that the ripple of the voltage that can be tapped at the output of the rectifier arrangement or of the current that can be tapped is minimal or is at least reduced.

2. Rectifier arrangement according to one of the preceding claims, **characterized in that** the diodes are Zener diodes.

3. Rectifier arrangement according to either of the preceding claims, **characterized in that** the different reverse recovery behaviour is achieved by using diodes having different breakdown voltages.

4. Rectifier arrangement according to Claim 3, **characterized in that** one of the two diodes is in the Zener voltage range of 18 volts to 50 volts and the other is in the Zener voltage range of 100 volts to 800 volts.

5. Rectifier arrangement according to one of the preceding claims, **characterized in that** twelve diodes are used as rectifier elements in a rectifier bridge, wherein in each case two diodes having different switching times or different reverse recovery switching times (trr) are connected in parallel.

6. Rectifier arrangement according to one of the preceding claims, **characterized in that**, in a rectifier bridge having twelve diodes, either only the positive or only the negative diodes have parallel circuits of two diodes having different properties.

7. Rectifier arrangement according to one of the preceding claims, **characterized in that**, in a rectifier bridge having twelve diodes, four diodes having the first property and eight having the second property are used.

## Revendications

1. Arrangement redresseur, notamment pont redresseur pour un générateur de courant alternatif, lequel comprend plusieurs éléments redresseurs, **caractérisé en ce que** les éléments redresseurs possèdent des circuits parallèles composés de deux diodes ayant des temps de commutation différents ou des temps de recouvrement inverse (trr) différents, les temps de commutation différents ou les temps de recouvrement inverse (trr) différents étant choisis de telle sorte que l'ondulation de la tension qui peut être prélevée ou le courant qui peut être prélevé à la sortie de l'arrangement redresseur est minimale ou au moins réduite.

2. Arrangement redresseur selon l'une des revendications précédentes, **caractérisé en ce que** les diodes sont des diodes Zener.

3. Arrangement redresseur selon l'une des revendications précédentes, **caractérisé en ce que** le comportement de recouvrement inverse différent est obtenu en utilisant des diodes ayant des tensions de claquage différentes.

4. Arrangement redresseur selon la revendication 3, **caractérisé en ce que** l'une des deux diodes se trouve dans la plage de tensions Zener de 18 volts à 50 volts et l'autre dans la plage de tensions Zener de 100 volts à 800 volts.

5. Arrangement redresseur selon l'une des revendications précédentes, **caractérisé en ce que** douze diodes sont utilisées en tant qu'éléments redresseurs sur un pont redresseur, deux diodes ayant des temps de commutation différents ou des temps de recouvrement inverse (trr) différents étant respectivement branchées en parallèle.

6. Arrangement redresseur selon l'une des revendications précédentes, **caractérisé en ce qu'**avec un pont redresseur comportant douze diodes, soit seules les diodes du positif, soit seules les diodes du négatif possèdent des circuits parallèles de deux diodes ayant des propriétés différentes.

7. Arrangement redresseur selon l'une des revendications précédentes, **caractérisé en ce qu'**avec un pont redresseur comportant douze diodes, quatre diodes ayant la première propriété et huit ayant la deuxième propriété sont utilisées.
